## Europäisches Patentamt
## European Patent Office
## Office européen des brevets

(11) Veröffentlichungsnummer: **0 258 436**
A1

# EUROPÄISCHE PATENTANMELDUNG
Veröffentlicht nach Art. 158 Abs. 3 EPÜ

(21) Anmeldenummer: 86902577.5

(22) Anmeldetag: 31.01.86

(51) Int. Cl.³: **B 23 D 15/04**
B 23 D 15/08, B 23 D 15/10

Daten der zugrundeliegenden internationalen Anmeldung:

(86) Internationale Anmeldenummer:
PCT/SU86/00007

(87) Internationale Veröffentlichungsnummer:
WO87/04649 (13.08.87 87/18)

(43) Veröffentlichungstag der Anmeldung:
09.03.88 Patentblatt 88/10

(84) Benannte Vertragsstaaten:
AT DE FR GB IT SE

(71) Anmelder: SLAVYANSKY FILIAL VSESOJUZNOGO
NAUCHNO-ISSLEDOVATELSKOGO I
PROEKTNO-KONSTRUKTORSKOGO INSTITUTA
METALLURGICHESKOGO
MASHINOSTROENIA IMENI A.I.TSELIKOVA ul.
Karpinskogo, 2a Donetskaya obl.
Slavyansk, 343202(SU)

(72) Erfinder: BOIDENKO, Nikolai Grigorievich
ul. Lenina, 39-20
Donetskaya obl.; Slavyansk, 343206(SU)

(72) Erfinder: SHANDYBA, Nikolai Ivanovich
ul. Detskaya, 45
Donetskaya obl.; Kramatorsk, 343902(SU)

(72) Erfinder: SHEINKMAN, Vladimir Davydovich
ul. Dvortsovaya, 43-53
Donetskaya obl.; Kramatorsk, 343912(SU)

(72) Erfinder: PANJUKHNO, Vasily Yakovlevich
per. Parkovy, 5-28
Donetskaya obl.; Slavyansk, 343221(SU)

(72) Erfinder: KAPOTA, Viktor Pavlovich
ul. Batjuka, 58-72
Slavyansk, 343216(SU)

(74) Vertreter: Lehn, Werner, Dipl.-Ing. et al,
Hoffmann, Eitle & Partner Patentanwälte Arabellastrasse 4
D-8000 München 81(DE)

(54) VERFAHREN UND VORRICHTUNG ZUM SCHNEIDEN VON BLATTMATERIAL.

(57) Das Verfahren zum Schneiden von Blechen auf einer Schere mit rollendem Schnitt wird durch Eindringen eines bogenförmigen Messers (2) in das Blech (13) und Abrollen dieses Messers (2) an einem geraden Messer (1) entlang mit Abbiegung des Teils (15), der abgeschnitten wird, realisiert. Der Teil (15), der abgeschnitten wird, wird einer Biegung unterworfen in zur vorhergehenden Biegung entgegengesetzter Richtung um einen Biegungswinkel, der konstant bis zum Ende des Schneidens und ausreichend zum Ausrichten des abgeschnittenen Teils (15) ist. Die Schere hat eine starre, unbewegliche Führungsschiene (14), auf der der Teil (15), der abgeschnitten wird, aufliegt, wenn er gebogen wird, die an einem Tisch (3) in einer Entfernung von der Schneide des geraden Messers (1) in Bewegungsrichtung des bogenförmigen Messers (2) während des Schneidens, die im wesentlichen der aus der Dicke des Blechs (13) und dem Wert der Überschneidung des geraden (1) und des bogenförmigen (2) Messers bestehenden Summe gleicht, angebracht ist.

FIG. 1

EP 0 258 436 A1

VERFAHREN ZUM SCHNEIDEN VON BLECHEN UND SCHERE 0258436
MIT ROLLENDEM SCHNITT ZUR REALISIERUNG DIESES
VERFAHRENS

### Gebiet der Technik

Die vorliegende Erfindung bezieht sich auf das Schneiden von Werkstoffen und betrifft ein Verfahren zum Schneiden von Blechen und eine Schere mit rollendem Schnitt zur Realisierung dieses Verfahrens.

### Bisheriger Stand der Technik

Es ist ein Verfahren zum Schneiden von Blechen und eine Schere mit rollendem Schnitt zur Realisierung dieses Verfahrens bekannt (siehe z.B. die Zeitschrift "Blech" (BRD), 1968, Nr. 11, S. 616 bis 622). Bei dem bekannten Blechschneidverfahren dringt ein bogenförmiges Messer in das zu schneidende Blech ein und rollt an einem geraden Messer entlang ab. Dabei sind bei diesem Blechschneidverfahren folgende Arbeitsgänge vorgesehen: Einschnitt des Blechs und Abtrennen mit Abbiegung des Rands des abzuschneidenden Blechteils in Richtung vom bogenförmigen Messer weg; Schneiden und Trennen des Blechs mit Abbiegung des Blechteils, der abgeschnitten wird, durch Abrollen des bogenförmigen Messers an dem geraden Messer entlang, wobei sich die Messer um einen gewissen Wert überschneiden.

Einem auf diesem Gebiet tätigen Fachmann ist der beim Schneiden von Blechen mit Hilfe eines geraden und eines bogenförmigen Messers auftretende Schnittwinkel, der von der Oberfläche des Blechs und der Tangente gebildet wird, die an dem Punkt an das bogenförmige Messer angelegt wird, wo sich die bogenförmige Linie des Messers mit der Oberfläche des Blechs schneidet, ein Begriff. Die Größe des Schnittwinkels hängt vor allem vom Radius des Bogens des bogenförmigen Massers, der Dicke des Blechs und der Größe der Überschneidung des geraden und des bogenförmigen Messers ab.

Mit "Überschneidung" wird die maximale Entfernung zwischen der Schneide des geraden Messers und der Schneide des bogenförmigen Messers zu jedem Zeitpunkt des Schneidprozesses des Blechs bezeichnet.

Unter Einwirkung der Schnittkraft wird der abzuschneidende Blechteil vom übrigen Blech abgetrennt, krümmt sich in

- 2 -

Richtung vom bogenförmigen Messer weg und verbleibt im gekrümmten Zustand nach Beendigung des Schneidens des Blechs;

Experimentell ist festgestellt worden, daß mit Vergrößerung des Schnittwinkels die bleibende Krümmung des abgeschnittenen Blechteils zunimmt, während die Schnittkraft kleiner wird. Deshalb werden bei dem bekannten Blechschneidverfahren vor allem kleine Schnittwinkel verwendet, was zu einer Vergrößerung der Schnittkraft führt. Aber selbst bei Verwendung kleiner Schnittwinkel kommt es besonders beim Schneiden von Blech in schmale Streifen zu einer unerwünschten Krümmung des abgeschnittenen Blechteils.

Das bekannte Blechschneidverfahren wird mit Hilfe einer bekannten Schere mit rollendem Schnitt realisiert, die ein gerades und ein bogenförmiges Messer enthält.

Das gerade Messer ist unbeweglich in einem Tisch angebracht und stellt eine senkrecht stehende Platte dar. Das bogenförmige Messer ist in einem Support befestigt, der mit Hilfe eines Antriebs eine hin- und hergehende Bewegung ausführen kann. Das zu schneidende Blech legt man waagerecht auf den Tisch zwischen das gerade und das bogenförmige Messer.

Wie bereits erwähnt, krümmt sich der Teil des Blechs, der abgeschnitten wird, vom bogenförmigen Messer weg bei der Durchführung des bekannten Blechschneidverfahrens unter Verwendung einer Schere mit rollendem Schnitt.

Nach Beendigung des Schneidens verbleibt der abgeschnittene Teil des Blechs im gekrümmten Zustand, was gewöhnlich negativ in Erscheinung tritt in verschiedenen Fällen der weiteren Verwendung des Blechs, besonders beim Schneiden von Blech in schmale Streifen.

Bei Verwendung eines kleinen Schnittwinkels in der bekannten Schere mit rollendem Schnitt wird die zum Schneiden des Blechs erforderliche Schnittkraft größer, was zu einer entsprechenden Vergrößerung der Antriebsleistung und der Masse der beweglichen Teile und der Schere selbst führt.

Außerdem behindert die Vergrößerung der Masse der beweglichen Teile und der Antriebsleistung bei kleinem Schnittwinkel die Schaffung von leistungsstärkeren Scheren.

Offenbarung der Erfindung

Der vorliegenden Erfindung liegt die Aufgabe zugrunde,

- 3 -

ein Verfahren zum Blechschneiden und eine Schere mit rollendem Schnitt zur Realisierung dieses Verfahrens zu schaffen, die es ermöglichen, einen ausgerichteten abgeschnittenen Blechteil zu erhalten.

Diese Aufgabe wird durch ein Verfahren zum Schneiden von Blechen auf einer Schere mit rollendem Schnitt gelöst, bei dem ein bogenförmiges Messer in das zu schneidenden Blech eindringt und an einem geraden Messer entlang mit Abbiegung des Teils, der abgeschnitten wird, abrollt, und bei dem gemäß der Erfindung der abzuschneidende Teil des Blechs in relativ zur vorhergehenden Biegung entgegengesetzter Richtung um einen Biegungswinkel gebogen wird, der konstant bis zum Ende des Schneidens und ausreichend zum Ausrichten des abgeschnittenen Blechteils ist.

Das Biegen des Teils, der abgeschnitten wird, zum bogenförmigen Messer hin verhindert das Entstehen von Restspannungen, die im Blech beim plastischen Biegen entstehen und die den Teil, der abgeschnitten wird, vom bogenförmigen Messer weg biegen. Das Biegen des Teils, der abgeschnitten wird, in Richtung zum bogenförmigen Messer um einen konstanten Biegungswinkel, der praktisch den Federungswinkel des Blechs darstellt, ermöglicht es, nach dem Schneiden einen ausgerichteten abgeschnittenen Blechteil zu erhalten, d.h. einen Blechteil ohne Krümmungen.

Es ist zweckmäßig, den Biegungswinkel nach folgender Formel zu bestimmen:

$$\varphi = \text{arc cos}\left[ 1 - \frac{h(1 - \varepsilon) + u}{R} \right],$$

worin:

$\varphi$ - Biegungswinkel,

$h$ - Dicke des Blechs,

$\varepsilon$ - Tiefe des relativen Einschnitts,

$u$ - Wert der Überschneidung des geraden und des bogenförmigen Messers,

$R$ - Radius des bogenförmigen Messers sind.

Die Bestimmung der Größe des Biegungswinkels, um den der abzuschneidende Blechteil gebogen werden muß und der praktisch dem Federungswinkel gleicht, ermöglicht es, nach dem erfindungsgemäßen Verfahren zum Blechschneiden im Ergebnis einen ausgerichteten oder einen mit vorgegebener Krümmung gebogenen abgeschnittenen Blechteil mit unterschiedlichen mechanischen Eigenschaften und unterschiedlicher Dicke der Bleche zu erhalten.

Die gestellte Aufgabe wird auch dadurch gelöst, daß in einer Schere mit rollendem Schnitt zur Realisierung des erfindungsgemäßen Verfahrens zum Blechschneiden, die ein gerades, an einem Tisch befestigtes Messer und ein in einem Support befestigtes bogenförmiges Messer enthält, gemäß der Erfindung eine starre unbewegliche Führungsschiene vorgesehen ist, auf der der Blechteil, der abgeschnitten wird, aufliegt, wenn er gebogen wird, und die am Tisch hinter dem geraden Messer in Richtung des Vorschubs des Blechs angebracht ist und sich in einer Entfernung von der Schneide des geraden Messers in Bewegungsrichtung des bogenförmigen Messers während des Schneidens, die im wesentlichen der aus der Dicke des Blechs und dem Wert der Überschneidung des geraden und des bogenförmigen Messers bestehenden Summe gleicht, befindet.

Die erfindungsgemäße Schere mit rollendem Schnitt ermöglicht die Beseitigung der unerwünschten Krümmung des abgeschnittenen Blechteils durch dessen Biegung zum bogenförmigen Messer hin um einen Biegungswinkel, der praktisch dem Federungswinkel gleicht, mit Hilfe der starren, unbeweglichen Führungsschiene und des bogenförmigen Messers.

Die Anbringung einer starren, unbeweglichen Führungsschiene in der Schere mit rollendem Schnitt in einiger Entfernung von der Schneide des geraden Messers ermöglicht es, einen vorgegebenen, nach der oben angeführten Formel bestimmten Biegungswinkel zu erreichen und ihn konstant bis zur Beendigung des Schneidens zu halten, was zum Ausrichten des Blechteils, der abgeschnitten wird, notwendig ist.

Das wird durch die starre, waagerechte Befestigung der Führungsschiene parallel zur Schneide des geraden Messers, den konstanten Wert der Überschneidung des geraden und des bogenförmigen Messers und durch einen bestimmten Radius des Bogens des bogenförmigen Messers erzielt.

Die Verwendung einer starren, unbeweglichen Führungsschiene in der erfindungsgemäßen Schere mit rollendem Schnitt verhindert ein Wegbiegen des Teils, der abgeschnitten wird, vom bogenförmigen Messer weg und bewirkt, daß sich dieser Teil ausrichtet oder eine vorgegebene Krümmung annimmt.

Dadurch, daß man auf der Schere mit rollendem Schnitt ausgerichtete, abgeschnittene Blechteile erhalten kann, bietet sich die Möglichkeit an, in der Schere mit rollendem Schnitt große Schnittwinkel zu verwenden und so die Schnittkraft zu verringern.

Es ist zweckmäßig, daß in der Schere mit rollendem Schnitt der Support eine bogenförmige, zur starren unbeweglichen Führungsschiene hin gerichtete Oberfläche mit dem gleichen Krümmungsradius wie das bogenförmige Messer hat.

Dadurch trägt der Support zusammen mit dem bogenförmigen Messer zum Ausrichten des abzuschneidenden Blechteils bei.

Die Verwendung eines bogenförmigen Messers und eines Supports mit bogenförmigen Flächen und einheitlichem Krümmungsradius zum Biegen des abzuschneidenden Teils des Blechs vergrößert deren Kontaktfläche mit dem Blechteil, der abgeschnitten wird, und verringert den spezifischen Druck und die Wahrscheinlichkeit der Entstehung eines Abdrucks des bogenförmigen Messers und des Supports auf der Oberfläche des abzuschneidenden Blechteils unter Einwirkung der beim Schneiden und Biegen auftretenden Kräfte.

Die oben dargelegten Umstände ermöglichen es, bei Verwendung des erfindungsgemäßen Verfahrens zum Schneiden von Blechen und der Schere mit rollendem Schnitt zur Realisierung dieses Verfahrens eine hohe Qualität der abgeschnittenen Blechteile infolge des gleichzeitigen Schneidens des Blechs und des Richtens der Teile, die abgeschnitten werden, durch deren Biegung um einen Winkel, der zum Ausrichten der Teile ausreichend ist, zu gewährleisten.

Außerdem ermöglicht die Verwendung des erfindungsgemäßen Verfahrens zum Schneiden von Blechen und der erfindungsgemäßen Schere mit rollendem Schnitt eine Verringerung der Schnittkraft, der Antriebsleistung und der Masse der Schere infolge der Anwendung großer Schnittwinkel.

Im folgenden wird die Beschreibung eines konkreten Ausführungsbeispiels der vorliegenden Erfindung mit Hinweisen auf die beiliegenden Zeichnungen angeführt.

## Kurze Beschreibung der Zeichnungen

Fig. 1 zeigt schematisch eine erfindungsgemäße Schere mit rollendem Schnitt im Längsschnitt;

Fig. 2 wie Fig. 1, einen Schnitt gemäß der Linie II-II in Fig. 1;

Fig. 3 zeigt schematisch eine erfindungsgemäße·Schere mit rollendem Schnitt in einer Ausführung, bei der die Lage der starren, unbeweglichen Führungsschiene in der Höhe reguliert werden kann;

Fig. 4 wie Fig. 3, einen Schnitt gemäß der Linie IV-IV in Fig. 3;

Fig. 5 zeigt die Stelle A in Fig. 2 in vergrößertem Maßstab;

Fig. 6 wie Fig. 5 für den Fall, wenn die Entfernung zwischen dem bogenförmigen Messer und der starren, unbeweglichen Führungsschiene größer als die Dicke des Blechs ist.

## Beste Ausführungsvariante der Erfindung

Das erfindungsgemäße Verfahren zum Schneiden von Blechen mit Hilfe einer Schere mit rollendem Schnitt wird dadurch realisiert, daß ein bogenförmiges Messer in das Blech eindringt und an einem geraden Messer entlang abrollt, wobei der abgeschnittene Teil abgebogen wird. Dabei wird der Blechteil, der abgeschnitten wird, einer Biegung unterworfen (gemeint ist eine plastische Biegung) in zur vorhergehenden Biegung entgegengesetzter Richtung um einen Biegungswinkel, der bis zum Ende des Schneidens konstant bleibt und zum Ausrichten der Blechteile, die abgeschnitten werden, ausreichend ist.

Dieses Verfahren zum Schneiden von Blechen wird ausführlicher und genau bei der Beschreibung der Schere mit rollendem Schnitt zur Realisierung dieses Verfahrens und deren Betrieb dargelegt.

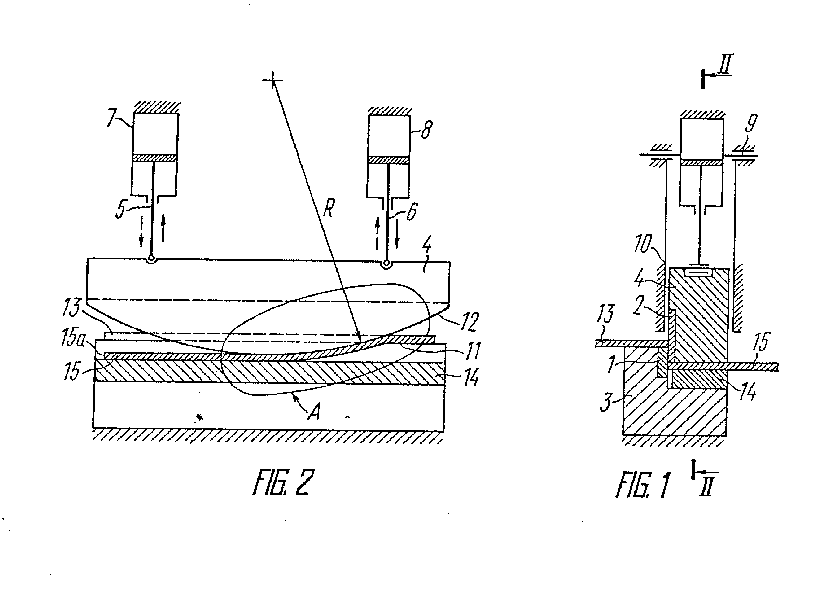

Die erfindungsgemäße Schere mit rollendem Schnitt zum Schneiden von Blechen enthält ein gerades Messer 1 (Fig.1) und ein bogenförmiges Messer 2. Das gerade Messer 1 hat die Form einer rechteckigen Platte, ist senkrecht aufgestellt

und mit Hilfe beliebiger bekannter Mittel an einem unbeweglichen Tisch 3 befestigt.

Das bogenförmige Messer 2 hat ebenfalls die Form einer Platte, ist senkrecht angebracht und in einer Nut (nicht abgebildet) eines Supports 4 mit Hilfe beliebiger bekannter Mittel auf dessen linker Seite entsprechend Fig. 1 befestigt. Die nach Fig. 1, 2 untere Fläche (nicht bezeichnet) des Supports 4 hat eine bogenförmige Gestalt, die mit der Form der unteren Fläche des bogenförmigen Messers 2 identisch ist.

Der Support 4 ist kinematisch über Kolbenstangen 5, 6 (Fig. 2) mit Antrieben 7, 8 verbunden, die im gegebenen Fall Hydraulikzylinder einer beliebigen bekannten, für diesen Zweck geeigneten Konstruktion darstellen. Jeder Antrieb 7, 8 ist in einem Widerlager 9 (Fig. 1) gelagert, das mit dem Mittelteil der Hydraulikzylinder 7, 8 verbunden ist (in Fig.2 sind die Widerlager 9 bedingt nicht abgebildet). Jeder Antrieb 7, 8 kann in der Ebene der Fig. 2 relativ zu den Widerlagern 9 Pendelbewegungen ausführen. Es sind zwei Leitschienen 10 (Fig. 1) einer beliebigen bekannten Konstruktion angebracht, an denen entlang sich der Support 4 bewegt.

Das gerade Messer 1 und das bogenförmige Messer 2 sind relativ zueinander so angeordnet, daß die Schneide 11 (Fig.2) des geraden Messers 1 und die Schneide 12 des bogenförmigen Messers 2 in einer senkrechten Ebene liegen, die im gegebenen Fall entsprechend Fig. 1 mit der linken Seite des Supports 4 zusammenfällt.

In anderen Ausführungsvarianten der vorliegenden Erfindung sind die Schneiden 11, 12 in einiger Entfernung voneinander angebracht, die in Abhängigkeit von der Dicke des zu schneidenden Blechs festgelegt wird.

Das Blech 13 liegt beim Schneiden auf dem Tisch 3. Der Tisch 3 hat einen Ausschnitt (nicht bezeichnet) auf seiner rechten Seite entsprechend Fig. 1 unter dem Support 4. Links von dem Ausschnitt befindet sich eine Nut (nicht bezeichnet) für das gerade Messer 1.

Im Ausschnitt des Tisches 3 befindet sich eine starre, unbewegliche Führungsschiene 14 (Fig. 1,2) hinter dem geraden Messer 1 in Richtung des Vorschubs des Blechs 13, auf der der Teil 15 des Blechs 13, der abgeschnitten wird, aufliegt. Die Führungsschiene 14 befindet sich in einiger Entfernung von der Schneide 11(Fig. 2) des geraden Messers 1 in Bewegungsrichtung des bogenförmigen Messers während des Schneidens, d.h. sie ist nach unten versetzt. Im gegebenen Fall gleicht diese Entfernung der Summe aus der Dicke des Blechs 13 und dem Wert der Überschneidung der Messer 1, 2, was im folgenden ausführlich beschrieben wird. Die zur Führungsschiene 14 hin gerichtete bogengörmige Fläche (nicht bezeichnet) des Supports 4 hat den gleichen Krümmungsradius R (Fig. 2) wie das bogenförmige Messer 2.

Die gesamte, summierte Breite der bogenförmigen Fläche des Supports 4 und des bogenförmigen Messers 2 (siehe Fig.1) wird auf Grund von Versuchen festgelegt und beträgt nicht weniger als die fünffache Dicke des Blechs 13.

Die Breite der Führungsschiene 14 kann der Gesamtbreite der bogenförmigen Fläche des Supports 4 und des bogenförmigen Messers 2 gleichen oder, wie im gegebenen Fall, etwas kleiner sein.

Auf Grund des Vorhandenseins der Führungsschiene 14 und des Supports 4, der eine bogenförmige Fläche mit dem gleichen Krümmungsradius wie das bogenförmige Messer 2 hat und der sich während des Biegens zusammen mit dem bogenförmigen Messer 2 bewegt, hat der abgeschnittene Teil 15 (Fig. 1) die gleiche Krümmung wie das bogenförmige Messer 2 und der Support 4 während des Schneidens.

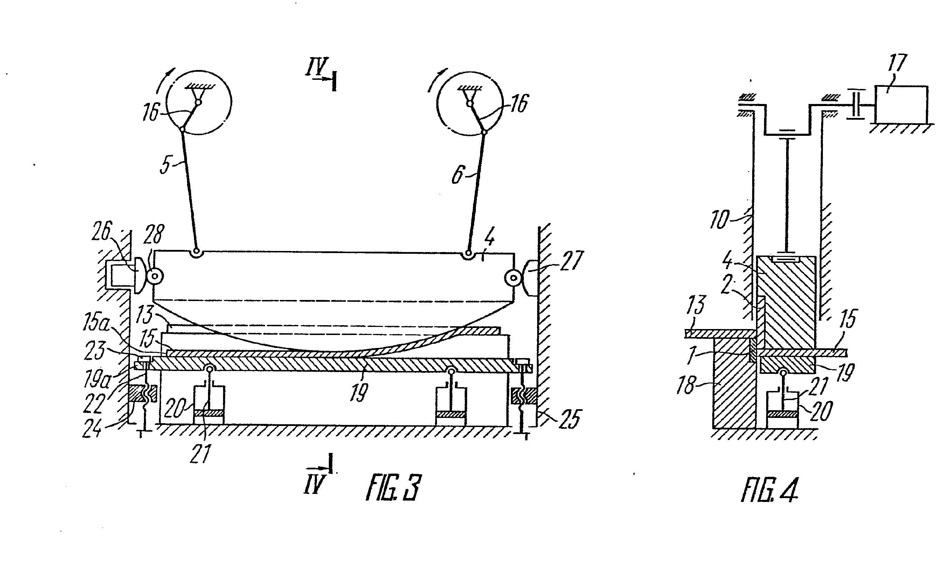

In Fig. 3, 4 ist eine andere Ausführungsvariante der erfindungsgemäßen Schere mit rollendem Schnitt abgebildet.

Das gerade und das bogenförmige Messer 1,2 und der Support 4 haben den gleichen Aufbau wie in der oben beschriebenen Variante.

Der Support 4 ist kinematisch mit Hilfe von Kolbenstangen, die Pleuelstangen mit den gleichen Bezugsnummern 5, 6 (Fig. 3) von Kurbeltrieben 16 einer beliebigen bekannten Bauart darstellen, mit einem elektrischen Antrieb 17 (Fig. 4) einer beliebigen bekannten, für diesen Zweck geeigneten Bauart verbunden.

Der Tisch 18 hat eine rechteckige Form und liegt links vom Support 4 entsprechend Fig. 4. Unter dem Support 4 befindet sich eine starre, unbewegliche Führungsschiene 19 (Fig. 3, 4) auf regulierbaren Stützen 20, die Hydraulikzylinder einer beliebigen bekannten Konstruktion darstellen, die Kolbenstangen 21 haben und die der Regulierung der Lage der Führungsschiene 19 vor Beginn des Schneidens in Abhängigkeit von der Dicke des Blechs 13 dienen.

Die Schere hat zwei Schrauben 22 (Fig. 3), die durch Öffnungen (nicht bezeichnet) in den Flanschen 19a der Führungsschiene 19 geführt sind. Jede Schraube 22 hat einen Kopf 23, der als Widerlager für die Führungsschiene 19 dient, wenn sie in Wechselwirkung mit der entsprechend Fig.3 oberen Stirnfläche (nicht bezeichnet) des Flansches 19a tritt. Die Schrauben 22 sind durch Muttern 24 geführt, die unbeweglich an einem Rahmen 25 befestigt sind. Die Schrauben 22 dienen der Begrenzung der einstellbaren Senkrechtbewegung der Führungsschiene 19, die mit Hilfe der regulierbaren Stützen 20 ausgeführt wird, die ebenfalls am Rahmen 25 befestigt sind.

Am Rahmen 25 befindet sich auf dessen entsprechend Fig.3 linker Seite eine bewegliche Schablone 26, die mit Hilfe beliebiger bekannter Mittel angebracht ist, die hier nicht beschrieben werden, da sie nicht das Wesen der Erfindung betreffen.

Am Rahmen 25 ist auf dessen entsprechend Fig. 3 rechter Seite eine unbewegliche Schablone 27 mit Hilfe beliebiger bekannter Mittel befestigt.

Mit der beweglichen Schablone 26 und der unbeweglichen Schablone 27 befindet sich der Support 4 über Rollen 28 in Wechselwirkung, die beweglich am Support 4 auf beliebige bekannte Weise angebracht sind.

Die bewegliche Schablone 26 und die unbewegliche Schablone 27 bestimmen die Lage des Supports 4 und des bogenförmigen Messers 2, wenn sie am geraden Messer 1 entlang abrollen.

Experimentall ist festgestellt worden, daß die plastische Biegung wie auch jede bleibende Verformung von elastischen Verformungen begleitet wird. Bei der Entlastung (Entfernung der äußeren Kräfte) stellt ein plastisch deformierter Körper teilweise seine ursprüngliche Form wieder her. Diese Erscheinung wird als elastische Rückverformung oder als Federung bezeichnet. Folglich muß man, um einen gekrümmten Blechstreifen auszurichten, ihn bogenartig in die entgegengesetzte Richtung mit solch einer Krümmung biegen, die nach der Entlastung durch die Wirkung der elastischen Kräfte beseitigt wird, so daß der Streifen gerade wird.

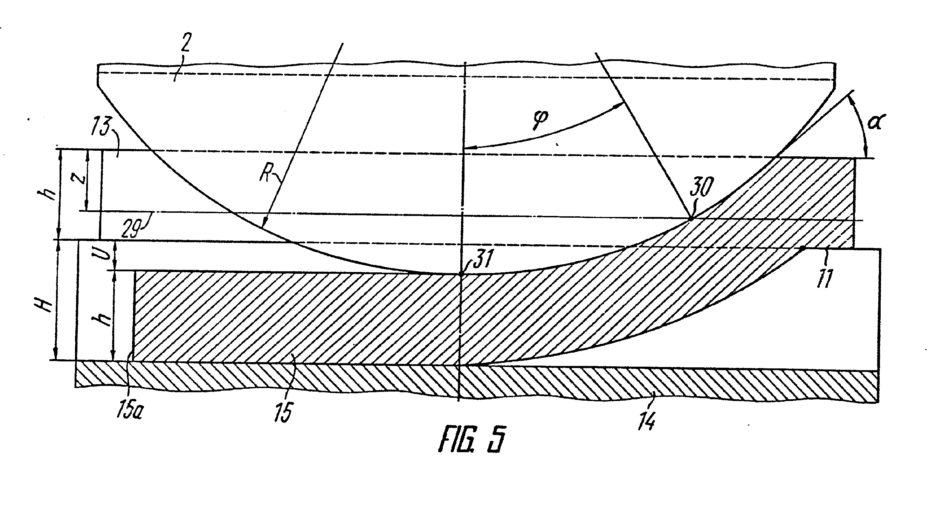

Darum muß man beim Schneiden von Blech 13 den Teil 15, der abgeschnitten wird, um einen Biegungswinkel biegen, der praktisch dem Federungswinkel gleich. Bei vorgegebenem Radius R des bogenförmigen Messers 2 bestimmt hauptsächlich die Lage der Führungsschiene 14, und zwar die Entfernung H (Fig.5) von der Schneide 11 des geraden Messers 1 bis zur Führungsschiene 14 während des Schneidens den Biegungswinkel $\varphi$ des Teils 15 des Blechs 13, der abgeschnitten wird.

Der Krümmungsradius R des bogenförmigen Messers 2 ist mit dem Schnittwinkel $\alpha$ durch folgende Gleichung verbunden:

$$R = \frac{h + u}{1 - \cos\alpha} \text{ ,}$$

worin

R - Radius des bogenförmigen Messers 2 in mm,

h - Dicke des Blechs 13 in mm,

u - Wert der Überschneidung der Messer 1, 2 in mm,

$\alpha$ - Schnittwinkel in Grad sind.

Die Führungsschiene 14 befindet sich in einer Entfernung H, die durch die Summe aus dem Wert der Überschneidung "u" der Messer 1, 2 und der Dicke h des Blechs 13 bestimmt wird.

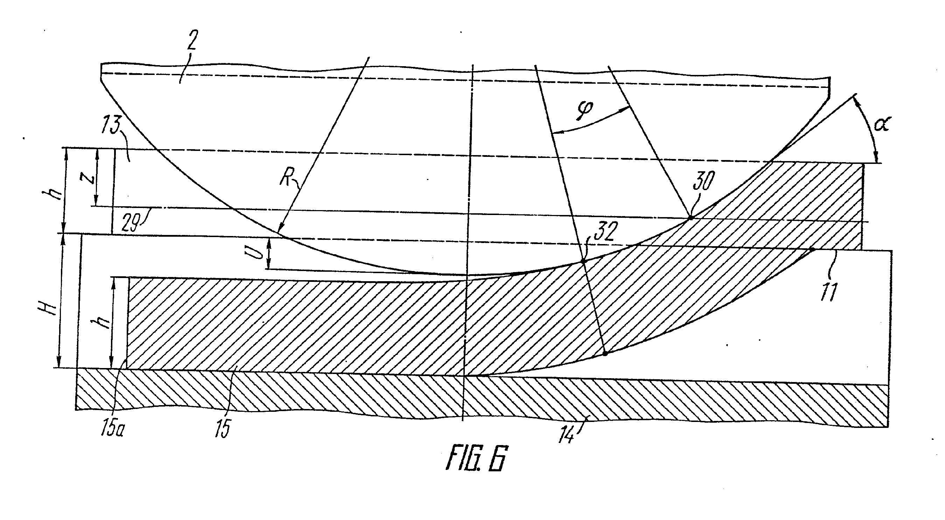

In einem anderen, in Fig. 6 gezeigten Fall wird die Entfernung H durch die Summe aus dem Wert der Überschneidung "u" der Messer 1, 2 und der Entfernung vom bogenförmigen Messer 2 bis zur Führungsschiene 14 während des Schneidens, die größer als die Dicke h des Blechs 13 ist, bestimmt.

Im ersten, oben beschriebenen Fall der Lage der Führungsschiene 14 entsprechend Fig. 5 kann der Biegungswinkel $\varphi$ des Teils 15, der abgeschnitten wird, durch folgende Formel bestimmt werden:

$$\varphi = \text{arc cos} \left[ 1 - \frac{h(1 - \varepsilon) + u}{R} \right] \text{ ,}$$

worin

$\varphi$ - Winkel in Grad,

h - Dicke des Blechs in mm,

$\mathcal{E}$ - Tiefe des relativen Einschnitts,

u - Wert der Überschneidung des geraden und des bogenförmigen Messers in mm,

R - Radius des bogenförmigen Messers in mm sind.

Die Tiefe $\mathcal{E}$ des relativen Einschnitts hängt von den mechanischen Eigenschaften des Blechs ab und kann für verschiedene Bleche nach folgender Formel bestimmt werden:

$$\mathcal{E} = \frac{Z}{h} \quad ,$$

worin

$\mathcal{E}$ - Tiefe des relativen Einschnitts,

Z - Entfernung zwischen der Oberfläche des Blechs 13 und der Abrißlinie 29 (Fig. 5, 6), die in der Dicke h des Blechs die Grenze festlegt, hinter der die Trennung des bereits abgeschnittenen Teils 15 vom übrigen Blech 13 eintritt (wird experimentell bestimmt), in mm,

h - Dicke des Blechs in mm sind.

In der betrachteten Variante der Lage der Führungsschiene 14 entsprechend Fig. 5 ist die Entfernung zwischen dem bogenförmigen Messer 2 und der Führungsschiene 14 gleich der Dicke h des Blechs 13.

Dabei hängt der Biegungswinkel $\varphi$ für ein konkretes Blech und einen bestimmten Radius R des bogenförmigen Messers 2 nur von der Überschneidung "u" der Messer 1, 2 ab.

In Fig. 5, 6 entspricht der Winkel $\varphi$ der Länge des Bogens des bogenförmigen Messers 2 vom Schnittpunkt 30 der Abrißlinie 29 mit dem Bogen des Messers 2 bis zum Punkt 31 (Fig. 5) oder bis zum Punkt 32 (Fig. 6), in dem das Messer 2 in Wechselwirkung mit dem abzuschneidenden Teil 15 tritt.

In der in Fig. 6 gezeigten Variante der Lage der Führungsschiene 14 ist der Biegungswinkel $\varphi$ wesentlich kleiner infolge einer Vergrößerung der Entfernung zwischen dem bogenförmigen Messer 2 und der Führungsschiene 14. Im gegebenen Fall kann man die Entfernung H und entsprechend den

Biegungswinkel φ des abzuschneidenden Teils 15 experimentell bestimmen. Zu diesem Zweck kann man die Lage der Führungsschiene 14 relativ zur Schneide 11 des geraden Messers 1 vor Beginn des Schneidens regulieren, wie in Fig. 3, 4 abgebildet ist.

Die erfindungsgemäße, in Fig. 1, 2 abgebildete Schere mit rollendem Schnitt funktioniert folgendermaßen.

In den geöffneten Zwischenraum (nicht abgebildet) zwischen dem geraden Messer 1 und dem bogenförmigen Messer 2 wird bei der Ausgangsstellung der Messer das Blech 13 durchgelassen, und man legt es auf den Tisch 3 und das gerade Messer 1 derart, daß der abzuschneidende Teil 15 des Blechs 13 sich hinter der Bewegungsebene der Schneide 12 des bogenförmigen Messers 2 in der Zone, in der sich der Support 4 und das bogenförmige Messer 2 bewegen, befindet. Im Anfangsmoment befinden sich die Kolbenstangen 5, 6 der Antriebe 7, 8 in der Ausgangsstellung, in der sie eingezogen sind.

Die Führungsschiene 14 bringt man waagerecht und parallel zur Schneide 11 des geraden Messers 1 in einer Entfernung H von der Schneide 11 in Stellung. Dann schaltet man gleichzeitig zwei Antriebe 7, 8 zur Bewegung des Supports 4 mit dem bogenförmigen Messer 2 mit Hilfe der Kolbenstangen 5, 6 ein.

Der Kolbenstange 5 wird zuerst eine größere Geschwindigkeit als die Geschwindigkeit der Kolbenstange 6 mitgeteilt, weshalb das bogenförmige Messer 2 mit Hilfe der Kolbenstange 5 in das Blech 13 von Seiten der Kolbenstange 5 eindringt.

Dabei schneiden das gerade Messer 1 und das bogenförmige Messer 2 das Blech 13 ein und trennen den Rand 15a (Fig.2) des abzuschneidenden Teils 15 vom übrigen Blech 13 von Seiten der Bewegung der Kolbenstange 5 ab.

Der Rand 15a des abzuschneidenden Teils 15 wird unter Einwirkung der Schnittkraft und durch den Schnittwinkel ∝ in Richtung von bogenförmigen Messer 2 weg abgebogen.

Die Führungsschiene 14 begrenzt die Bewegung des abgetrennten und abgebogenen Rands 15a des abzuschneidenden Teils 15 des Blechs 13.

Bei der weiteren gleichlaufenden Bewegung der Kolben-

0258436

stangen 5, 6 und dem Eindringen des bogenförmigen Messers 2 liegt der Rand 15a des abzuschneidenden Teils 15 des Blechs 13 auf der Führungsschiene 14 auf, und der Teil 15, der abgeschnitten wird, wird einer plastischen Biegung unterworfen, die in zur vorhergehenden Biegung in entgegengesetzter Richtung um einen Biegungswinkel $\varphi$ erfolgt, der vorher bestimmt worden ist, ausgehend von der Dicke h des Blechs, seinen mechanischen Eigenschaften und der Überschneidung der Messer 1, 2.

Auf diese Weise biegt man den Teil 15 des Blechs 13, der abgeschnitten wird, um den Winkel $\varphi$ und drückt ihn mit der unteren Fläche des bogenförmigen Messers 2 und des Supports 4 an die Führungsschiene 14 mit einer Biegungskraft an, die von den Antrieben 7, 8 über das bogenförmige Messer 2 und den Support 4 übertragen wird und die zum Biegen des Teils 15, der abgeschnitten wird, um den Winkel $\varphi$ ausreichend ist.

Danach rollt das bogenförmige Messer 2 am geraden Messer 1 entlang ab. Das Abrollen des bogenförmigen Messers 2 geschieht mit Hilfe der Kolbenstangen 5, 6 bei ihrer Bewegung in entgegengesetzten Richtungen. Das bogenförmige Messer 2 rollt über die Oberfläche (nicht bezeichnet) des Teils 15 des Blechs 13, der abgeschnitten wird, und zerschneidet zusammen mit dem geraden Messer 1 das Blech 13.

Gleichzeitig nehmen das bogenförmige Messer 2 und der Support 4 beim Rollen über die Oberfläche des abzuschneidenden Teils 15 mit ihrer gewölbten Fläche zusammen mit der Führungsschiene 14 den Teil 15, der abgeschnitten wird, auf und biegen ihn um den Winkel $\varphi$.

Beim Eindringen des bogenförmigen Messers 2 in das Blech 13 und beim Abrollen des bogenförmigen Messers 2 am geraden Messer 1 entlang gewährleisten die festgestellte Befestigung der Führungsschiene 14 waagerecht und parallel zur Schneide 11 des geraden Messers 1, das ständige gegenseitige Überschneiden "u" der Messer 1, 2 während des Schneidvorganges und der Krümmungsradius des Supports 4, der dem Radius R der bogenförmigen Fläche des Messers 2 gleicht, eine Konstanthaltung des Biegungswinkels $\varphi$ des Teils 15, der abgeschnitten wird, während des Schneidvorgangs.

Wenn das bogenförmige Messer 2 am geraden Messer 1 entlang bis zum Ende abgerollt ist, ist das Schneiden des Blechs 13 beendet, und der abgeschnittene Teil 15 des Blechs 13 liegt frei nach der Rückkehr des bogenförmigen Messers 2 in die Ausgangslage zum Beginn eines neuen Schnitts. Dabei werden die Kolbenstangen 5, 6 der Antriebe 7, 8 eingezogen. Danach kann ein neues Blech geschnitten werden.

Die in Fig. 3, 4 abgebildete Schere mit rollendem Schnitt funktioniert in ähnlicher Weise wie bereits beschrieben, das Eindringen des bogenförmigen Messers 2 in das Blech 13 und das Abrollen des bogenförmigen Messers 2 am geraden Messer 1 entlang wird aber durch den elektrischen Antrieb 17 mit Hilfe von Kurbeltrieben 16 bewirkt. Die bewegliche und unbewegliche Schablonen 26, 27 gewährleisten eine rollende Schneidbewegung des bogenförmigen Messers 2 beim Abrollen der Rollen 28 des Supports 4 über die Schablonen 26, 27.

Die Führungsschiene 19 bringt man waagerecht und parallel zur Schneide 11 des geraden Messers 1 in einer Entfernung H mit Hilfe der regulierbaren Stützen 20 und der Schrauben 22 in Stellung.

Während des Schneidens des Blechs 13 und des Biegens des Teils 15, der abgeschnitten wird, um den Winkel $\varphi$ ist die Führungsschiene 19 unbeweglich. Das wird durch das Andrücken der oberen Stirnfläche der Flansche 19a der Führungsschiene 19 an die Köpfe 23 der Schrauben 22 mit Hilfe der Hydraulikzylinder der regulierbaren Stützen 20 erzielt.

Zum Zweck einer Änderung der Entfernung H ändert man die Lage der Führungsschiene 19 relativ zur Schneide 11 des geraden Messers 1. Dabei werden die Kolbenstangen 21 der regulierbaren Stützen 20 eingezogen und die Schrauben 22 mit den Köpfen 23 durch Drehen in den Muttern 24 in die geforderte Stellung gebracht. Danach treten die Kolbenstangen 21 der regulierbaren Stützen 20 hervor und drücken die Führungsschiene 19 an die Köpfe 23 der Schrauben 22 über die oberen Stirnflächen der Flansche 19a mit einer Kraft an, die größer ist als die zum Biegen des abgeschnittenen Teils 15 des Blechs 13 aufgewendete Kraft.

Im weiteren funktioniert die in Fig. 3, 4 dargestellte

- 15 -

Schere ähnlich wie die bereits beschriebene, in Fig. 1, 2 abgebildete Schere.

Das erfindungsgemäße Verfahren zum Schneiden von Blechen und die erfindungsgemäße Schere mit rollendem Schnitt zur Realisierung dieses Verfahrens sind unter Laborverhältnissen erfolgreich erprobt worden.

Die Erprobungen haben gezeigt, daß man damit abgeschnittene Blechteile mit hoher Qualität erhalten kann. Dabei entfällt vollkommen die Notwendigkeit eines nachträglichen Richtens der abgeschnittenen Blechteile mit Hilfe autonom funktionierender Ausrüstung.

- 16 -

Industrielle Anwendbarkeit

Am wirkungsvollsten kann die vorliegende Erfindung zum Schneiden dicker Metallbleche und Bleche aus Metallegierungen, die als Walzerzeugnisse vorliegen, verwendet werden.

Das erfindungsgemäße Verfahren zum Schneiden von Blechen und die erfindungsgemäße Schere mit rollendem Schnitt zur Realisierung dieses Verfahrens können auch auf Fertigungsstraßen zur Nachbearbeitung von Walzblech in Hüttenwerken und in Werksabteilungen von Maschinenbaubetrieben, in denen Halbzeug hergestellt wird, bei der Anfertigung gerichteter, geschnittener Bleche verwendet werden.

## PATENTANSPRÜCHE

1. Verfahren zum Schneiden von Blechen auf einer Schere mit rollendem Schnitt, bei dem ein bogenförmiges Messer (2) in das zu schneidende Blech (13) eindringt und an einem geraden Messer (1) entlang abrollt mit Abbiegung des Teils (15), der abgeschnitten wird, dadurch g e k e n n z e i c h n e t , dass der Teil (15) des Blechs (13), der abgeschnitten wird, in relativ zur vorhergehenden Biegung entgegengesetzter Richtung um einen Biegungswinkel ($\varphi$) gebogen wird, der konstant bis zum Ende des Schneidens und ausreichend zum Ausrichten des abgeschnittenen Teils (15) des Blechs (13) ist.

2. Verfahren zum Schneiden von Blechen nach Anspruch 1, dadurch g e k e n n z e i c h n e t , dass der Biegungswinkel ($\varphi$) nach folgender Formel bestimmt wird:

$$\varphi = arc\ cos \left[ 1 - \frac{h(1 - \varepsilon) + u}{R} \right]$$

worin

$\varphi$ - Biegungswinkel,

h - Dicke des Blechs,

$\varepsilon$ - Tiefe des relativen Einschnitts,

u - Wert der Überschneidung des geraden und des bogenförmigen Messers,

R - Radius des bogenförmigen Messers sind.

3. Schere mit rollendem Schnitt zur Realisierung des Verfahrens zum Schneiden von Blechen nach Anspruch 1, die ein gerades, an einem Tisch (3) befestigtes Messer (1) und ein in einem Support (4) befestigtes bogenförmiges Messer (2) enthält, dadurch g e k e n n z e i c h n e t , dass eine starre, unbewegliche Führungsschiene (14) vorgesehen ist, auf der der Teil (15) des Blechs (13), der abgeschnitten wird, aufliegt, wenn er gebogen wird, und die am Tisch (3) hinter dem geraden Messer (1) in Richtung des Vorschubs des Blechs (13) angebracht ist und sich in einer Entfernung von der Schneide (11) des geraden Messers (1) in Bewegungsrichtung des bogenförmigen Messers (2) während des Schneidens, die im wesentlichen der aus der Dicke des Blechs (13) und dem Wert der Überschneidung des geraden (1) und des bogenförmigen (2) Messers bestehenden Summe gleicht, befindet.

4. Schere nach Anspruch 3, d a d u r c h   g e k e n n -
z e i c h n e t , daß der Support (4) eine bogenförmige Fläche hat, die zu der starren, unbeweglichen Führungsschine
(14) hin gerichtet ist mit dem gleichen Krümmungsradius
( R ) wie der des bogenförmigen Messers (2).

FIG. 2

FIG. 1

0258436

FIG. 3

FIG. 4

FIG 5

0258436

FIG.6

# INTERNATIONAL SEARCH REPORT

International Application No PCT/SU 86/00007

**I. CLASSIFICATION OF SUBJECT MATTER** (if several classification symbols apply, indicate all) [6]

According to International Patent Classification (IPC) or to both National Classification and IPC

IPC[4] B 23 D 15/04, 15/08, 15/10

**II. FIELDS SEARCHED**

| Minimum Documentation Searched [7] |
|---|
| Classification System | Classification Symbols |

| IPC[4] | B 23 D 15/00, 15/04, 15/06, 15/08, 15/10 |

Documentation Searched other than Minimum Documentation
to the Extent that such Documents are Included in the Fields Searched [8]

**III. DOCUMENTS CONSIDERED TO BE RELEVANT [9]**

| Category [*] | Citation of Document, [11] with indication, where appropriate, of the relevant passages [12] | Relevant to Claim No. [13] |
|---|---|---|
| A | SU, A1, 725823, (Slavyansky filial Vsesojuznogo nauchno-issledovatelskogo i proektno-konstruktorskogo instituta metallurgicheskogo mashinostroenia), 15 April 1980 (15.04.80) see column 3, lines 56-58, column 4, lines 1-3, fig. 1 | 1 |
| A | SU, A1, 975252, (Slavyansky filial Vsesojuznogo nauchno-issledovatelskogo i proektno-konstruktorskogo instituta metallurgicheskogo mashinostroenia), 28 November 1982 (28.11.82), see column 2, lines 4-9, fig. 1 | 3 |
| A | GB, A, 1440169, (Schloemann-Siemag Aktiengesellschaft), 23 June 1976 (23.06.76), see page 2, lines 57-65, fig. 1 | 3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 29 August 1986 (29.08.86) | 21 October 1986 (21.10.86) |

| International Searching Authority | Signature of Authorized Officer |
|---|---|
| ISA/SU | |

Form PCT/ISA/210 (second sheet) (January 1985)